# FASCICULE DE BREVET EUROPEEN

(11) **EP 3 990 249 B1**
(45) Date de publication et mention de la délivrance du brevet: **18.12.2024**
(21) Numéro de dépôt: 20733824.5
(22) Date de dépôt: 24.06.2020
(51) Int. Cl.: B29C 49/06, B29C 35/08, B29C 49/64, B29C 49/68

(54) **UNITE DE CHAUFFE DE CORPS CREUX POUR MACHINE DE FABRICATION DE RECIPIENTS EN MATIERE PLASTIQUE**
EINHEIT ZUM ERWÄRMEN VON HOHLKÖRPERN FÜR EINE MASCHINE ZUR HERSTELLUNG VON KUNSTSTOFFBEHÄLTERN
UNIT FOR HEATING HOLLOW BODIES FOR MACHINE FOR MANUFACTURING PLASTIC CONTAINERS

(30) Priorité: 25.06.2019 FR 1906877
(43) Date de publication de la demande: 04.05.2022
(73) Titulaire: Sidel Participations, 76930 Octeville-sur-Mer (FR)
(72) Inventeur: FEUILLOLEY, Guy, 76930 Octeville sur Mer (FR); LAHOGUE, Yoann, 76930 Octeville sur Mer (FR)
(74) Mandataire: Sidel Group
(86) Numéro de dépôt international: PCT/EP2020/067601
(87) Numéro de publication internationale: WO 2020/260341

(56) Documents cités:
- EP-A1- 2 425 959
- WO-A1-2013/076415
- WO-A1-2018/015637
- WO-A1-2018/029283
- WO-A1-2019/038441
- WO-A2-2006/060690
- DE-A1- 102017 120 634

## Description

Le domaine de l'invention est celui de la conception et de la fabrication de machines pour la fabrication de récipients en matière plastique.

Plus précisément, l'invention concerne une unité de chauffe permettant de chauffer des corps creux en matière plastique à ou au-delà d'une température de transition vitreuse, préalablement à la formation de récipients à partir desdits corps creux.

Pour fabriquer des récipients en matière plastique à partir de corps creux, il est nécessaire de chauffer lesdits corps creux jusqu'à ce que leur matière plastique constitutive atteigne ou dépasse la température de transition vitreuse à laquelle la matière peut être déformée aisément, tout en limitant les risques de déchirures de la matière plastique.

Dans le cas de récipients prenant la forme de bouteilles, les corps creux sont chauffés puis introduits dans une unité de formage dans laquelle ils seront soufflés, généralement par injection d'un fluide sous pression.

Pour réaliser la chauffe des corps creux, ces derniers circulent au défilé pour entrer dans une unité de chauffe et y être chauffés par des modules de chauffe.

Les unités de chauffe sont classiquement constituées de modules accolés les uns aux autres pour former une paroi d'émission de rayonnement chauffant destinée à chauffer et ramollir la matière plastique des corps creux.

Les modules de chauffe portent des sous modules ayant chacun des moyens d'émission.

A titre d'exemple, les moyens d'émission peuvent mettre en oeuvre une technologie laser ou une technologie halogène.

Classiquement, les modules de chauffe comprennent un bâti sur lequel sont montés plusieurs sous-modules d'émission superposés les uns sur les autres.

Les sous-modules d'émission comprennent chacun un support sur lesquels sont montés les moyens d'émission.

Plus particulièrement, les moyens d'émission s'étendent sur une largeur inférieure à la largeur du support de sorte qu'une zone technique soit disposée de part et d'autre des moyens d'émission.

En d'autres termes, ces zones techniques sont formées par une portion du support qui est dépourvue de moyens d'émission.

Ces zones techniques permettent à la fois un refroidissement des moyens d'émission mais également le raccordement des moyens d'émission à une source d'énergie.

Les modules classiquement connus présentent ainsi, selon le sens de défilement des corps creux face à eux, une succession de zones émettrices de rayonnement thermique, encadrées par une zone non émettrice de rayonnement thermique.

Sur la paroi d'émission, il est donc constaté des colonnes non émettrices de rayonnement thermique. Dès lors, les corps creux rencontrent, lors de leur passage devant la paroi d'émission, des zones non émettrices de rayonnement thermique sur toute leur hauteur.

Ces colonnes non émettrices de rayonnement thermique impactent donc l'homogénéité de la chauffe des corps creux.

Pour pallier cela, les fours comprennent généralement deux parois émettrices en vis-à-vis pour former un couloir dans lequel les corps creux défilent.

Les parois émettrices peuvent notamment être décalées les unes par rapport aux autres pour qu'une zone émettrice d'une première paroi soit en regard d'une zone non émettrice de la deuxième paroi.

Une autre technique consiste à faire pivoter les corps creux sur eux-mêmes le long de leur trajectoire dans l'unité de chauffe. Cela permet que des faces non exposées au rayonnement dans un premier temps soient exposées au rayonnement dans un deuxième temps.

Bien que ces techniques permettent d'améliorer la chauffe des corps creux en l'homogénéisant, elles n'en restent pas moins pourvues d'inconvénients.

En effet, l'utilisation de deux parois émettrices augmente la consommation énergétique de l'unité de chauffe.

Par ailleurs, la rotation des corps creux demande soit un mécanisme de guidage par exemple mécanique de la rotation des corps creux, qui peut être piloté par ordinateur. Un tel guidage demande alors une conception importante et coûteuse des moyens de guidage.

En outre, pour les chauffes préférentielles, c'est-à-dire des chauffes lors desquelles une partie des corps creux est plus ou moins chauffée que d'autres parties du même corps creux, la conception et la mise en place des systèmes de guidage et/ou de rotation des corps creux s'en trouvent encore complexifiées.

Enfin, pour obtenir une chauffe homogène, il peut être utile de chauffer de manière plus intense certaines portions du corps creux telles que le fond et la partie proche du col du corps creux. En effet, la portion centrale est la portion la plus chauffée des corps creux, notamment du fait de la conduction thermique de la matière plastique.

Ainsi, il peut être utile de chauffer plus intensément les parties supérieures et inférieures pour que le corps creux sortant de l'unité de chauffe présente une température constante ou quasiment sur toute sa hauteur.

Le document DE 10 2017 120634 A1 décrit une unité de chauffe d'une succession de corps creux, comprenant au moins deux modules d'émission contigus, chaque module d'émission comprenant une superposition de zones émettrices d'un rayonnement thermique et de zones non apte à émettre un rayonnement thermique, dans lequel lesdits modules sont agencés de manière que, sur une même hauteur et selon une trajectoire de déplacement des corps creux dans l'unité de chauffe, une zone émettrice d'un rayonnement thermique d'un premier module soit suivie par une zone non apte à émettre un rayonnement thermique d'un deuxième module.

L'invention a notamment pour objectif de pallier les inconvénients de l'art antérieur.

Plus précisément, l'invention a pour objectif de proposer une unité de chauffe permettant d'obtenir une chauffe homogène des corps creux, ou au contraire une chauffe préférentielle et précise des corps creux.

L'invention a également pour objectif de fournir une telle unité de chauffe qui permette d'accroître la durée de vie des sous-modules d'émission.

L'invention a en outre pour objectif de fournir une telle unité de chauffe pour laquelle la maintenance et/ou le remplacement peuvent être réalisés aisément.

Ces objectifs, ainsi que d'autres qui apparaîtront par la suite, sont atteints grâce à l'invention selon la revendication 1 qui a pour objet une unité de chauffe d'une succession de corps creux comprenant au moins deux modules d'émission contigus, chaque module d'émission comprenant une superposition de zones émettrices d'un rayonnement thermique et de zones non émettrices un rayonnement thermique, caractérisée en ce que les modules sont agencés de manière que, sur une même hauteur et selon une trajectoire de déplacement des corps creux dans l'unité de chauffe, une zone émettrice d'un rayonnement thermique d'un premier module soit suivie par une zone non émettrice d'un rayonnement thermique d'un deuxième module. De plus, les zones émettrices (11) de chaque module (3) s'étendent sur la totalité de la largeur dudit module (3).

Les modules d'émission sont contigus l'un à l'autre le long de la trajectoire de déplacement des corps creux et les zones émettrices et non-émettrices sont superposées l'une à l'autre dans le sens de la hauteur, c'est-à-dire selon une direction transversale à la trajectoire de déplacement des corps creux dans l'unité de chauffe.

Ainsi, le motif créé par les zones émettrices et les zones non émettrice est un damier selon la trajectoire de déplacement des corps creux dans l'unité de chauffe.

Selon le type de chauffe voulu, c'est-à-dire une chauffe homogène ou une chauffe préférentielle, il est possible d'avoir soit une alternance complète de zones émettrices et de zones non émettrice, ou alors un chevauchement au moins partiel des zones émettrices de deux modules adjacents, le long de la trajectoire des corps creux.

Avantageusement, chaque module d'émission comprend une pluralité de sous-modules d'émission incluant chacun un support ayant une face d'émission et des moyens d'émission montés sur la face d'émission.

La face d'émission est alors tournée vers les corps creux qui défilent dans l'unité de chauffe, de sorte à former une paroi d'émission.

Les moyens d'émission sont ainsi montés sur la face d'émission, par exemple en étant simplement fixés dessus ou en étant encastrés dans celle-ci.

De préférence, chaque support présente une première hauteur HS, et les moyens d'émission présentent une deuxième hauteur HE inférieure à la première hauteur HS.

Cette différence de hauteur permet de créer des zones non émettrices permettant de refroidir les moyens d'émission sur toute leur longueur.

En effet, les moyens d'émission sont écartés les uns des autres de sorte qu'ils puissent être refroidis à la fois par l'arrière, mais également par le dessus et le dessous. Ainsi, la durée de vie des moyens d'émission s'en trouve prolongée.

Selon un mode de réalisation, les moyens d'émission de chaque sous-module d'émission comprennent un unique organe d'émission.

Cela permet de créer un motif en damier mais également de réaliser une capacité de refroidissement accru des moyens d'émission.

Le motif en damier peut également être créé de manière fine pour offrir la meilleure homogénéité de chauffe ou, au contraire, la précision recherchée pour réaliser des secteurs plus ou moins chauds sur les corps creux.

Préférentiellement, l'organe d'émission comprend une pluralité de diodes agencées sous la forme d'une barre.

Ainsi, le refroidissement des modules et notamment de l'organe d'émission s'en trouve facilité, tout comme la création du motif en damier.

Avantageusement, pour chaque sous-module d'émission, les moyens d'émission sont centrés sur la face d'émission.

Le refroidissement de l'organe d'émission peut donc être assuré par le support qui les porte, ainsi que par un sous-module inférieur et/ou un sous-module supérieur.

En variante, pour chaque sous-module d'émission, les moyens d'émission sont situés près d'un bord inférieur ou d'un bord supérieur de la surface d'émission.

Selon cette variante, le refroidissement de l'organe d'émission reste équivalent par rapport au centrage des moyens d'émission sur la face d'émission, mais la mise en place des sous-modules permet, de manière intuitive et facile, de créer le motif en damier, sur deux modules adjacents.

En effet, sur un premier module, les sous-modules peuvent être montés selon un premier sens, tandis que sur le sous-module adjacent, les sous-modules sont montés en sens contraire, par exemple en étant pivotés de 180°.

Selon un mode de réalisation préférentiel, la face d'émission porte un revêtement réfléchissant du rayonnement thermique.

Ce revêtement réfléchissant permet de rediriger le rayonnement thermique vers les corps creux pour en favoriser leur chauffe mais également d'éviter que le support ne chauffe, cela afin d'assurer le refroidissement des moyens d'émission.

Selon un autre aspect, l'invention porte sur une unité de chauffe d'une succession de corps creux comprenant au moins deux modules d'émission contigus, chaque module d'émission comprenant une superposition de zones émettrices d'un rayonnement thermique et de zones non apte à émettre un rayonnement thermique, caractérisée en ce que les modules sont agencés de manière que, sur une même hauteur et selon une trajectoire de déplacement des corps creux dans l'unité de chauffe, une zone émettrice d'un rayonnement thermique d'un premier module soit suivie par une zone non apte à émettre un rayonnement thermique d'un deuxième module.

Avantageusement, les modules d'émission sont contigus l'un à l'autre le long de la trajectoire de déplacement des corps creux et les zones émettrices et non-émettrices sont superposées l'une à l'autre dans le sens de la hauteur, c'est-à-dire selon une direction transversale à la trajectoire de déplacement des corps creux dans l'unité de chauffe.

Ainsi, le motif créé par les zones émettrices et les zones non apte à émettre un rayonnement thermique est un damier selon la trajectoire de déplacement des corps creux dans l'unité de chauffe.

Selon le type de chauffe voulu, c'est-à-dire une chauffe homogène ou une chauffe préférentielle, il est possible d'avoir soit une alternance complète de zones émettrices et de zones non apte à émettre un rayonnement thermique, ou alors un chevauchement au moins partiel des zones émettrices de deux modules adjacents, le long de la trajectoire des corps creux.

Avantageusement, chaque module d'émission comprend une pluralité de sous-modules d'émission incluant chacun un support ayant une face d'émission et des moyens d'émission montés sur la face d'émission.

La face d'émission est alors tournée vers les corps creux qui défilent dans l'unité de chauffe, de sorte à former une paroi d'émission.

Les moyens d'émission sont ainsi montés sur la face d'émission, par exemple en étant simplement fixés dessus ou en étant encastrés dans celle-ci.

De préférence, chaque support présente une première hauteur HS, et les moyens d'émission présentent une deuxième hauteur HE inférieure à la première hauteur HS.

Cette différence de hauteur permet de créer des zones non aptes à émettre un rayonnement thermique permettant de refroidir les moyens d'émission sur toute leur longueur.

En effet, les moyens d'émission sont écartés les uns des autres de sorte qu'ils puissent être refroidis à la fois par l'arrière, mais également par le dessus et le dessous. Ainsi, la durée de vie des moyens d'émission s'en trouve prolongée.

Selon un mode de réalisation, les moyens d'émission de chaque sous-module d'émission comprennent un unique organe d'émission.

Cela permet de créer un motif en damier mais également de réaliser une capacité de refroidissement accru des moyens d'émission.

Le motif en damier peut également être créé de manière fine pour offrir la meilleure homogénéité de chauffe ou, au contraire, la précision recherchée pour réaliser des secteurs plus ou moins chauds sur les corps creux.

Préférentiellement, l'organe d'émission comprend une pluralité de diodes agencées sous la forme d'une barre.

Ainsi, le refroidissement des modules et notamment de l'organe d'émission s'en trouve facilité, tout comme la création du motif en damier.

Avantageusement, pour chaque sous-module d'émission, les moyens d'émission sont centrés sur la face d'émission.

Le refroidissement de l'organe d'émission peut donc être assuré par le support qui les porte, ainsi que par un sous-module inférieur et/ou un sous-module supérieur.

En variante, pour chaque sous-module d'émission, les moyens d'émission sont situés près d'un bord inférieur ou d'un bord supérieur de la surface d'émission.

Selon cette variante, le refroidissement de l'organe d'émission reste équivalent par rapport au centrage des moyens d'émission sur la face d'émission, mais la mise en place des sous-modules permet, de manière intuitive et facile, de créer le motif en damier, sur deux modules adjacents.

En effet, sur un premier module, les sous-modules peuvent être montés selon un premier sens, tandis que sur le sous-module adjacent, les sous-modules sont montés en sens contraire, par exemple en étant pivotés de 180°.

Selon un mode de réalisation préférentiel, la face d'émission porte un revêtement réfléchissant du rayonnement thermique.

Ce revêtement réfléchissant permet de rediriger le rayonnement thermique vers les corps creux pour en favoriser leur chauffe mais également d'éviter que le support ne chauffe, cela afin d'assurer le refroidissement des moyens d'émission

D'autres caractéristiques et avantages de l'invention apparaitront plus clairement à la lecture de la description suivante de modes de réalisation préférentiels de l'invention, donnés à titre d'exemple illustratif et non limitatif, et des dessins annexés parmi lesquels :
[Fig. 1] est une vue schématique en perspective de dessus d'une unité de chauffe selon l'invention ;
[Fig. 2] est une vue schématique en perspective montrant un module de l'unité de chauffe selon l'invention ;
[Fig. 3] est une vue schématique en perspective arrière d'un sous-système d'émission d'un module selon l'invention ;
[Fig. 4] est une vue schématique en coupe d'un sous-système d'émission d'un module selon l'invention, selon un premier mode de réalisation ;
[Fig. 5] est une vue schématique en coupe d'un sous-système d'émission d'un module selon l'invention, selon un deuxième mode de réalisation ;
[Fig. 6] est une vue schématique en coupe d'un sous-système d'émission d'un module selon l'invention, selon un troisième mode de réalisation ;
[Fig. 7] est une vue schématique de face partielle d'une paroi de chauffe d'une unité de chauffe selon l'invention.
[Fig. 8] est une vue schématique illustrant une variante de la paroi de chauffe de la figure 7. La figure 8 ne fait pas partie de l'invention.

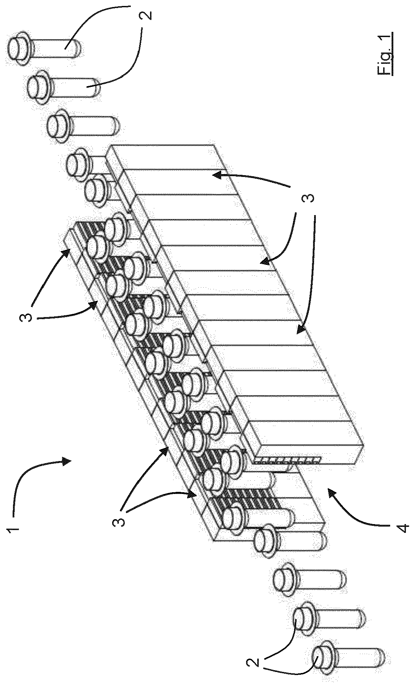

La figure 1 illustre une unité de chauffe 1 selon l'invention, pour chauffer des corps creux 2, en matière plastique, à ou au-delà d'une température de transition vitreuse de la matière plastique des corps creux 2.

Le cheminement des corps creux 2 aux alentours et dans l'unité de chauffe 1 se fait comme suit. En amont et en aval de l'unité de chauffe 1, les corps creux 2 défilent de manière linéaire, c'est-à-dire les uns derrière les autres. Lors de leur passage dans l'unité de chauffe 1, les corps creux 2 peuvent être disposés en quinconce. Le flux de corps creux 2 en amont de l'unité de chauffe 1 est ainsi scindé en deux à l'entrée de l'unité de chauffe 1, puis regroupé au sortir de l'unité de chauffe 1.

L'unité de chauffe 1 est composée de modules 3 aboutés pour former une paroi d'émission d'un rayonnement chauffant.

Plus précisément, tel qu'illustré sur la figure 1, l'unité de chauffe 1 présente un couloir 4 formé par deux parois d'émission d'un rayonnement chauffant, ce couloir 4 étant destiné à être traversé par les corps creux 2 en matière plastique, lors de leur cheminement.

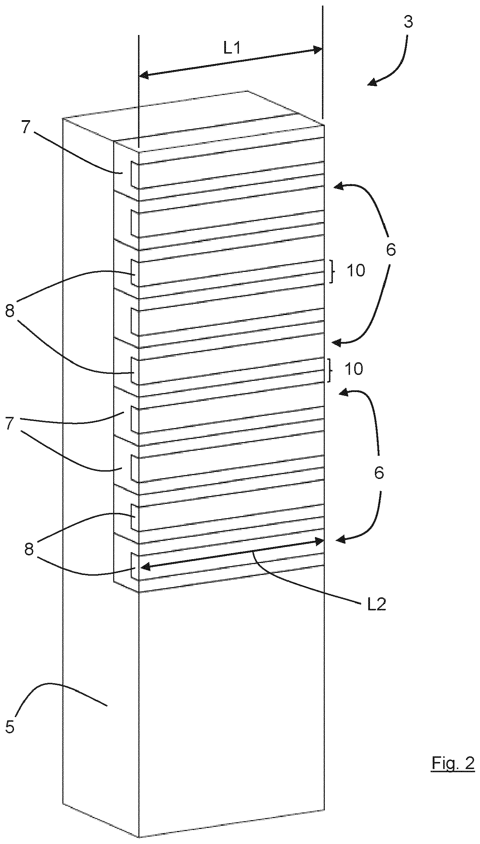

En référence à la figure 2, un module 3 de l'unité de chauffe 1 est illustré.

Ce module 3 comprend un bâti 5 sur lequel sont montés accolés plusieurs sous-modules d'émission 6.

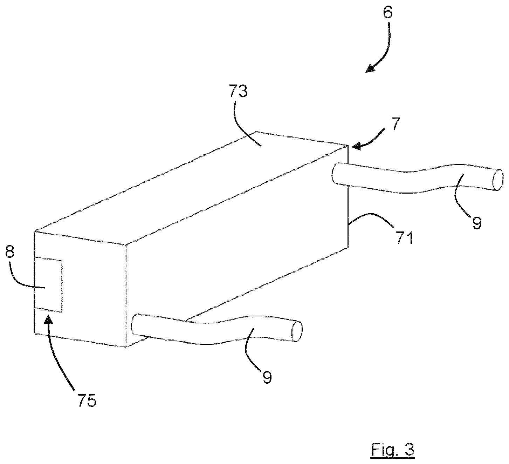

Les sous-modules d'émission 6 sont plus précisément superposés les uns sur les autres. Tel qu'illustré sur la figure 3, un sous-module d'émission 6 comprend :
- un support 7 ;
- des moyens d'émission 8 ;
- des moyens de raccordement électrique 9 du sous-module d'émission 6 à une source d'énergie électrique.

Les moyens de raccordement électrique 9 se présentent par exemple sous la forme de câbles électriques unique joignant le support 7 par l'arrière du sous-module d'émission 6 et permettant le raccordement à la source d'énergie électrique.

Le support 7 présente une face arrière 71 destinée à venir en appui contre le bâti 5 du module, et une face d'émission 72, opposée à la face arrière 71, et destinée à recevoir les moyens d'émission 8.

Le support 7 présente également une face supérieure 73 et une face inférieure 74 opposées, la face supérieure 73 d'un premier support 7 pouvant recevoir la face inférieure 74 d'un deuxième support 7 lorsque plusieurs sous-modules d'émission 6 sont superposés les uns sur les autres, tel qu'illustré sur la figure 2.

En outre, le support 7 présente un réseau interne de canaux permettant de faire circuler un fluide de refroidissement, par exemple de l'eau distillée.

Les moyens d'émission 8 sont composés d'un unique organe d'émission et se présentent, par exemple, sous la forme d'une barre émettrice. Plus particulièrement, les moyens d'émission 8 se présentent sous la forme d'une barre de diodes laser.

De manière encore plus précise, les moyens d'émission 8 comprennent une pluralité de composants semi-conducteurs émetteurs de lumière, tel que des VCSEL (acronyme de l'expression anglaise Vertical-Cavity Surface-Emitting Laser), accolés les uns aux autres pour former ladite barre émettrice.

Tel qu'on le voit sur la figure 2 et sur la figure 3, les moyens d'émission 8 s'étendent sur la totalité de la largeur du support 7.

Plus particulièrement, le support présente une première largeur L1, et les moyens d'émission 8 présentent une deuxième largeur L2 sensiblement égale à la première largeur L1 du support 7.

De même, le support 7 présente une hauteur HS et les moyens d'émission 8 présentent une hauteur HE.

Avantageusement, la hauteur HE des moyens d'émission 8 est inférieure à la hauteur HS du support 7. A titre d'exemple, la hauteur HE des moyens d'émission 8 est deux fois inférieure à la hauteur HS du support 7

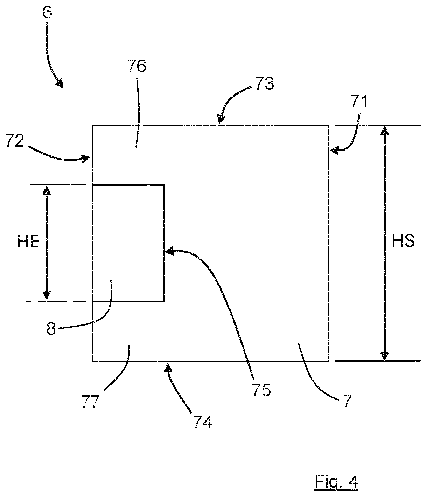

Les figures 4, 5 et 6 illustrent trois modes de réalisation d'un sous-système d'émission 6 de l'unité de chauffe 1 selon l'invention.

Selon un premier mode de réalisation illustré sur la figure 4, le support 7 présente une rainure 75 destinée à recevoir les moyens d'émission 8.

Plus précisément, la rainure 75 est pratiquée sur la face d'émission 72 du support 7 en direction de la face arrière 71.

Tel qu'on le voit sur la figure 4, lorsque les moyens d'émission 8 sont couplés au support 7, ils sont intégrés dans la rainure 75, affleurant avec la face d'émission 72 du support 7.

La rainure 75 est avantageusement positionnée au centre de la face d'émission 72 du support 7. Ainsi, les moyens d'émission 8 sont logés dans le support 7 qui présente une partie supérieure 76 et une partie inférieure 77 respectivement au-dessus et en dessous des moyens d'émission 8.

Selon ce mode de réalisation, le support 7, grâce à la partie supérieure 76 et la partie inférieure 77, peut dissiper les calories produites par les moyens d'émission 8 à l'extérieure du module 3 ou vers le bâti 5 du module 3. Cette transmission de calories se fait notamment par conductivité thermique à l'intérieur du support 7 et extraction des calories par les fluides de refroidissement.

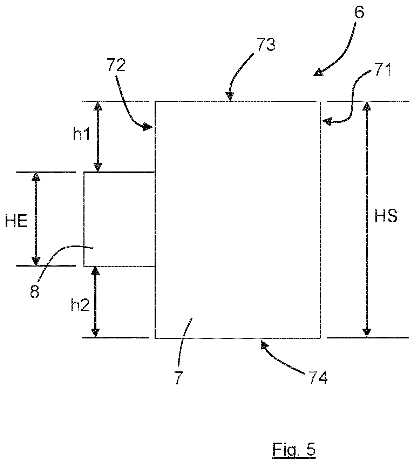

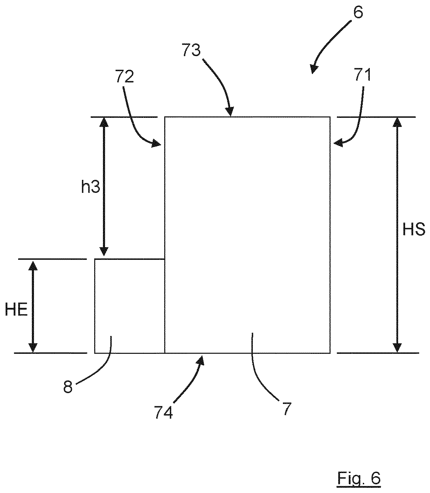

Selon un deuxième mode de réalisation illustré sur la figure 5 et un troisième mode de réalisation illustré sur la figure 6, les moyens d'émission 8 sont montés directement sur la face d'émission 72 du support 7, le support 7 étant alors dépourvu de la rainure 75.

Les moyens d'émission 8 ne sont donc supportés par le support 7 que par la face d'émission 72 de ce dernier.

Ainsi, lorsque les moyens d'émission 8 émettent un rayonnement chauffant, les calories dissipées par les moyens d'émission 8 peuvent être évacués par la face d'émission 72, d'autant plus facilement que la dissipation peut se faire dans un volume dont la hauteur est supérieure à la hauteur du seul moyen d'émission 8.

Selon le deuxième mode de réalisation, les moyens d'émission 8 sont situés au milieu de la face d'émission 72 du support 7.

Plus précisément, les moyens d'émission 8 sont situés à une hauteur h1 et h2 de la face supérieure 73 et de la face inférieure 74 du support 7 respectivement.

En d'autres termes, les hauteurs h1 et h2 sont égales l'une à l'autre.

Selon le troisième mode de réalisation illustré sur la figure 6, les moyens d'émission 8 sont situés près d'un bord inférieur ou d'un bord supérieur de la surface d'émission 72.

Autrement dit, les moyens d'émission 8 sont situés au voisinage de la face supérieure 73 ou de la face inférieure 74 du support 7.

Plus précisément, tel qu'illustré sur la figure 6, les moyens d'émission 8 sont situés à proximité de la face inférieure 74 du support 7 et sont écartés de la face supérieure 73 d'une hauteur h3 égale ou quasiment aux deux tiers de la hauteur HS du support 7.

Ainsi, lorsque les moyens d'émission 8 sont actifs, c'est-à-dire qu'ils émettent un rayonnement thermique, les calories produites par les moyens d'émission 8 sont avantageusement évacuées vers la face supérieure 73 du support 7 par conduction thermique entre le support 7 et les moyens d'émission 8.

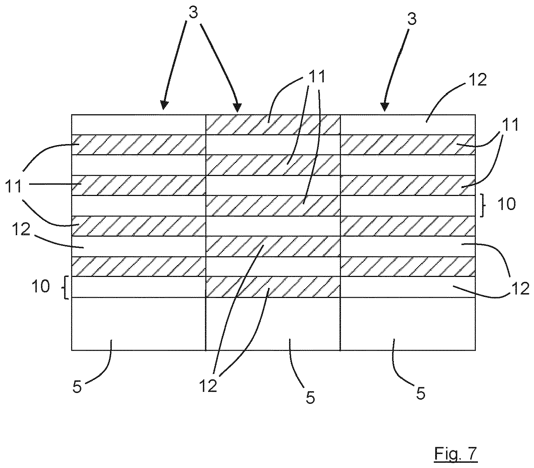

En référence à la figure 7, une paroi d'émission est partiellement représentée. Cette paroi d'émission est composée ou formée par l'aboutement de plusieurs modules 3 côte à côte.

Tel qu'on le voit sur les figures 2 et 7, entre deux moyens d'émission 8 superposés l'un sur l'autre, une hauteur d'espacement 10 est créée.

Cette hauteur d'espacement 10 permet la dissipation des calories émise par les moyens d'émission 8.

Avantageusement, la hauteur d'espacement 10 est égale à la hauteur des moyens d'émission 8.

Tel qu'on le voit sur les figures 2, 7 et/ou 8, un module 3 présente alors un motif vertical formé par une alternance de zones émettrices 11, c'est-à-dire de zones formées par les moyens d'émission 8, et de zones non émettrices 12, c'est-à-dire de zones formées par les hauteurs d'espacement 10. En d'autres termes, on entend par l'expression « zones 12 non émettrices » une zone qui n'est pas apte à émettre de rayonnement thermique.

En référence à la figure 7, les modules d"émission 3 sont agencés pour former un damier.

Plus précisément, les hauteurs d'espacement 10 d'un premier module 3 sont suivies, selon une trajectoire T de déplacement des corps creux 2 dans l'unité de chauffe 1, par une zone émettrice 11 d'un deuxième module 3 contigu.

Ce motif de damier est avantageusement répété sur toute la paroi de l'unité de chauffe 1, ou sur chaque paroi de l'unité de chauffe 1.

Un tel motif en damier permet de s'affranchir de zones verticales non apte à émettre de rayonnement thermique, c'est-à-dire de zones 12 non apte à émettre de rayonnement thermique sur toute la hauteur du module 3, le long de la trajectoire T des corps creux 2 dans l'unité de chauffe 1.

En effet, les zones 12 non apte à émettre de rayonnement thermique, c'est-à-dire les hauteurs d'espacement 10, s'étendent parallèlement à la trajectoire T des corps creux 2 et présentent une hauteur assez faible pour que la conduction thermique dans le matériau permette de générer une chauffe sensiblement homogène sur la totalité de la périphérie du corps creux 2. Par ailleurs, pour obtenir une chauffe parfaitement homogène, il peut être possible de combiner le motif en damier à une rotation des corps creux 2 lors de leur passage dans l'unité de chauffe 1.

Avantageusement, la largeur d'un module 3, est égale au développé périphérique des corps creux 2. Toutefois, il est possible de moduler cette valeur en fonction de la vitesse de rotation des corps creux 2 étant entendu que, selon son déplacement, la périphérie entière du corps creux 2 est soumise au rayonnement d'un même module.

Autrement dit, pour un même module 3, un corps creux 2 est exposé à un temps d'émission égal en chaque point de sa périphérie.

De même, le nombre de modules 3 pour chaque paroi est avantageusement un nombre pair. En considérant une paroi d'émission d'un rayonnement chauffant, la vitesse de rotation des corps creux 2 (par exemple cinq tours par seconde) en fonction de la largeur des modules 3 sur chaque paroi d'unité de chauffe 1 permet de réaliser une chauffe totalement homogène des corps creux 2 en ce que chaque point des corps creux 2, sur la périphérie des corps creux 2, reçoit une exposition identique au rayonnement des moyens d'émission 8.

En d'autres termes, la chauffe des corps creux 2, selon la figure 7, est homogène d'un point de vue de l'unité de chauffe 1.

En revanche, en considérant les corps creux 2, l'homogénéité de la chauffe peut être obtenue grâce à une chauffe préférentielle des corps creux 2.

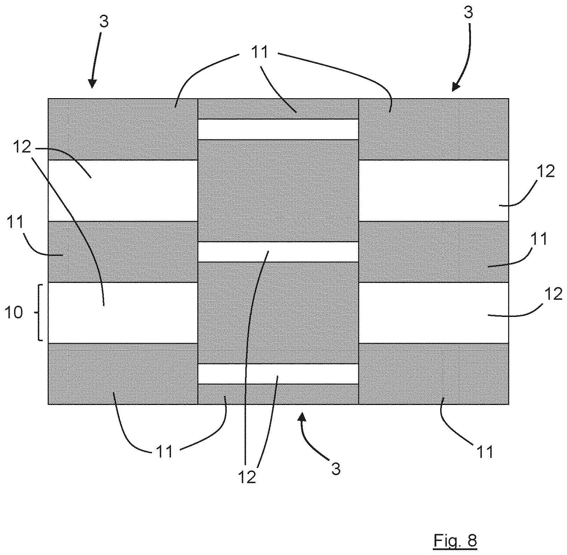

En référence à la figure 8, qui ne fait pas partie de l'invention, l'homogénéité de la chauffe des corps creux 2 résulte d'une sur exposition et/ou d'une sous exposition d'une partie du corps creux 2 sur sa hauteur.

En effet, sur une portion centrale du corps creux 2, la chaleur est généralement plus élevée qu'à ses extrémités (au niveau de son col et de son fond), même si la quantité de rayonnement chauffant reçue par le corps creux est identique en chaque point du corps creux 2.

Cela s'explique notamment par le fait que la température se propage par convection thermique dans la matière plastique des corps creux 2.

Ainsi, la portion centrale reçoit les calories provenant des extrémités en plus des calories du rayonnement thermique, la courbe de chaleur sur la hauteur d'un corps creux 2 pouvant prendre la forme d'une gaussienne (les extrémités étant plus froides que le centre de la préforme sur sa hauteur).

Pour pallier à cela, il peut être prévu de surchauffer les extrémités des corps creux 2.

Cette surchauffe peut être réalisée par augmentation de la puissance du rayonnement thermique émis par les moyens d'émission 8 vers lesdites zones d'extrémité ou par chevauchement des zones émettrices 11 de deux modules 3 contigus, tel que cela est illustré sur la figure 8. qui ne fait pas partie de l'invention.

En effet, le chevauchement de deux zones émettrices contiguës provoque une augmentation de la durée d'exposition du corps creux 2 au rayonnement thermique. La chauffe de la matière plastique s'en trouve alors augmentée.

Il est donc possible de surchauffer les extrémités du corps creux 2 par simple chevauchement de zones émettrices de deux modules 3 contigus. La convection thermique dans le corps creux 2 permettant de conserver une chauffe homogène en sortie de l'unité de chauffe 1.

Selon un mode de réalisation préférentiel, la face d'émission 72 du support 7 est recouverte d'un revêtement réfléchissant du rayonnement thermique.

Selon un autre mode de réalisation, la zone 12 non apte à émettre de rayonnement thermique peut être recouverte d'un revêtement réfléchissant du rayonnement thermique.

A titre d'exemple indicatif, le revêtement réfléchissant est une fine couche d'or.

Cette couche d'or permet notamment de réfléchir le rayonnement laser des moyens d'émission 8 sans que le support 7 ne surchauffe.

La présence de la hauteur d'espacement 10 en-dessous et/ou au-dessus des moyens d'émission 8 permet d'offrir une durée de vie supérieure aux moyens d'émission 8, grâce à un meilleur refroidissement.

En effet, les moyens d'émission 8 sont refroidis à la fois par-dessus, par-dessous et par derrière, contrairement à l'art antérieur où les moyens d'émission 8 ne sont refroidis que par les côtés, et par derrière.

La surface d'échange entre les moyens d'émission 8 et le support 7 est alors plus importante dans l'unité de chauffe 1 selon l'invention que selon l'art antérieur.

Selon une variante de réalisation non illustrée, les modules 3 sont dépourvus de bâti 5 et ne comprennent alors qu'une superposition de sous-modules d'émission 6.

Dans ce cas, une plaque commune à tous les modules 3 d'émission est agencée dans l'unité de chauffe 1 et forme un bâti sur lequel sont fixés tous les sous-modules d'émission 6.

## Revendications

1. Unité de chauffe (1) d'une succession de corps creux, comprenant au moins deux modules d'émission (3) contigus, chaque module d'émission (3) comprenant une superposition de zones émettrices (11) d'un rayonnement thermique et de zones (12) non apte à émettre un rayonnement thermique, dans laquel lesdits modules (3) sont agencés de manière que, sur une même hauteur et selon une trajectoire (T) de déplacement des corps creux (2) dans l'unité de chauffe (1), une zone émettrice (11) d'un rayonnement thermique d'un premier module (3) soit suivie par une zone (12) non apte à émettre un rayonnement thermique d'un deuxième module (3), **caractérisée en ce que** les zones émettrices de chaque module s'étendent sur la totalité de la largeur dudit module.

2. Unité de chauffe (1) selon la revendication 1, **caractérisée en ce que** chaque module d'émission (3) comprend une pluralité de sous-modules d'émission (6) incluant chacun un support (7) ayant une face d'émission (72) et des moyens d'émission (8) montés sur la face d'émission (72).

3. Unité de chauffe (1) selon la revendication précédente, **caractérisée en ce que** chaque support (7) présente une première hauteur (HS), et les moyens d'émission (8) présentent une deuxième hauteur (HE) inférieure à la première hauteur HS.

4. Unité de chauffe (1) selon la revendication 2 ou la revendication 3, **caractérisée en ce que** les moyens d'émission (8) de chaque sous-module d'émission (6) comprennent un unique organe d'émission.

5. Unité de chauffe selon la revendication précédente, **caractérisée en ce que** l'organe d'émission comprend une pluralité de diodes agencées sous la forme d'une barre.

6. Unité de chauffe (1) selon l'une quelconque des revendications 2 à 5, **caractérisée en ce que**, pour chaque sous-module d'émission (6), les moyens d'émission (8) sont centrés sur la face d'émission (72).

7. Unité de chauffe (1) selon l'une quelconque des revendications 2 à 5, **caractérisée en ce que**, pour chaque sous-module d'émission (6), les moyens d'émission (8) sont situés près d'un bord inférieur ou d'un bord supérieur de la surface d'émission (72).

8. Unité de chauffe (1) selon l'une quelconque des revendications 2 à 7, **caractérisée en ce que** la face d'émission (72) porte un revêtement réfléchissant du rayonnement thermique.

## Patentansprüche

1. Einheit zum Erwärmen (1) einer Aufeinanderfolge von Hohlkörpern, die wenigstens zwei aneinandergrenzende Abgabemodule (3) umfasst, wobei jedes Abgabemodul (3) eine Überlagerung von Abgabebereichen (11) einer Wärmestrahlung und von nicht zur Abgabe einer Wärmestrahlung geeigneten Bereichen (12) umfasst, wobei die Module (3) so angeordnet sind, dass auf ein und derselben Höhe und entlang einer Bewegungsbahn (T) der Hohlkörper (2) in der Erwärmungseinheit (1) auf einen Abgabebereich (11) einer Wärmestrahlung eines ersten Moduls (3) ein nicht zur Abgabe einer Wärmestrahlung geeigneter Bereich (12) eines zweiten Moduls (3) folgt, **dadurch gekennzeichnet, dass** sich die Abgabebereiche jedes Moduls über die gesamte Breite des Moduls erstrecken.

2. Erwärmungseinheit (1) nach Anspruch 1, **dadurch gekennzeichnet, dass** jedes Abgabemodul (3) eine Mehrzahl von Teilabgabemodulen (6) umfasst, die jeweils einen Träger (7) mit einer Abgabefläche (72) und Abgabemitteln (8), die auf der Abgabefläche (72) angebracht sind, beinhalten.

3. Erwärmungseinheit (1) nach dem vorhergehenden Anspruch, **dadurch gekennzeichnet, dass** jeder Träger (7) eine erste Höhe (HS) aufweist und die Abgabemittel (8) eine zweite Höhe (HE), die niedriger als die erste Höhe HS ist, aufweisen.

4. Erwärmungseinheit (1) nach Anspruch 2 oder 3, **dadurch gekennzeichnet, dass** die Abgabemittel (8) jedes Teilabgabemoduls (6) ein einziges Abgabeorgan umfassen.

5. Erwärmungseinheit nach dem vorhergehenden Anspruch, **dadurch gekennzeichnet, dass** das Abgabeorgan eine Mehrzahl von Dioden umfasst, die in Form einer Leiste angeordnet sind.

6. Erwärmungseinheit (1) nach einem der Ansprüche 2 bis 5, **dadurch gekennzeichnet, dass** für jedes Teilabgabemodul (6) die Abgabemittel (8) auf der Abgabefläche (72) zentriert sind.

7. Erwärmungseinheit (1) nach einem der Ansprüche 2 bis 5, **dadurch gekennzeichnet, dass** sich die Abgabemittel (8) für jedes Teilabgabemodul (6) in der Nähe einer Unterkante oder Oberkante der Abgabeoberfläche (72) befinden.

8. Erwärmungseinheit (1) nach einem der Ansprüche 2 bis 7, **dadurch gekennzeichnet, dass** die Abgabefläche (72) eine Beschichtung trägt, die die Wärmestrahlung reflektiert.

## Claims

1. Unit (1) for heating a succession of hollow bodies, comprising at least two contiguous emission modules (3), each emission module (3) comprising a superposition of zones (11) that emit thermal radiation and zones (12) that are not able to emit thermal radiation, wherein said modules (3) are arranged such that, at one and the same height and along a trajectory (T) of movement of the hollow bodies (2) through the heating unit (1), a zone (11) that emits thermal radiation of a first module (3) is followed by zone (12) that is not able to emit thermal radiation of a second module (3), **characterized in that** the emitting zones of each module extend over the entire width of said module.

2. Heating unit (1) according to Claim 1, **characterized in that** each emission module (3) comprises a plurality of emission submodules (6) each including a support (7) having an emission face (72) and emission means (8) mounted on the emission face (72).

3. Heating unit (1) according to the preceding claim, **characterized in that** each support (7) has a first height (HS), and the emission means (8) have a second height (HE) less than the first height HS.

4. Heating unit (1) according to Claim 2 or Claim 3, **characterized in that** the emission means (8) of each emission submodule (6) comprise a single emission member.

5. Heating unit according to the preceding claim, **characterized in that** the emission member comprises a plurality of diodes arranged in the form of a bar.

6. Heating unit (1) according to any one of Claims 2 to 5, **characterized in that**, for each emission submodule (6), the emission means (8) are centred on the emission face (72).

7. Heating unit (1) according to any one of Claims 2 to 5, **characterized in that**, for each emission submodule (6), the emission means (8) are situated near a lower edge or an upper edge of the emission surface (72).

8. Heating unit (1) according to any one of Claims 2 to 7, **characterized in that** the emission face (72) bears a coating that reflects the thermal radiation.
